# EUROPÄISCHE PATENTSCHRIFT

(11) **EP 2 896 943 B1**
(45) Veröffentlichungstag und Bekanntmachung des Hinweises auf die Patenterteilung: **06.04.2022**
(21) Anmeldenummer: 15150105.3
(22) Anmeldetag: 05.01.2015
(51) Int. Cl.: G01J 5/08, G01J 5/06

(54) **Temperaturabfühlvorrichtung zum Abfühlen einer Temperatur eines Gargeschirrs**
Temperature sensor for sensing a temperature of a cooking pot
Dispositif de détection de température destiné à détecter une température dans d'un ustensile de cuisson

(30) Priorität: 20.01.2014 DE 102014200883
(43) Veröffentlichungstag der Anmeldung: 22.07.2015
(73) Patentinhaber: BSH Hausgeräte GmbH, 81739 München (DE)
(72) Erfinder: Has, Uwe, 84579 Unterneukirchen (DE); Marbach, Andreas, 83374 Traunwalchen (DE); Schemmerer, Roman, 83349 Palling (DE); Schuhbäck, Peter, 83329 Holzhausen (DE); Vormann, Ingo, 83413 Fridolfing (DE); Zeraschi, Monika, 83301 Traunreut (DE)

(56) Entgegenhaltungen:
- EP-A1- 2 515 091
- EP-B1- 0 931 496
- WO-A1-2007/061137
- JP-A- H08 313 342
- US-A1- 2004 031 274
- US-A1- 2004 057 493
- US-B1- 6 266 197

## Beschreibung

Die Erfindung betrifft eine Temperaturabfühlvorrichtung zum berührungslosen Abfühlen einer Temperatur eines Gargeschirrs, aufweisend: ein Gehäuse mit einem darin angeordneten, durch eine Öffnung in dem Gehäuse gerichteten IR-Sensor und eine in der Öffnung vor dem IR-Sensor angeordnete, für IR-Strahlung durchlässige IR-Durchlichtoptik.

In der DE 1 739 099 U wird eine Vorrichtung zur Überwachung der Temperatur bei Elektrowärmegeräten beschrieben, die beim Erreichen einer bestimmten Temperatur des Wärmegeräts bzw. des zu erwärmenden Gutes den Heizstrom ganz oder teilweise abschalten und gegebenenfalls bei sinkender Temperatur wieder zuschalten kann, wobei im letzteren Falle die Temperatur etwa auf dem gleichen vorher einstellbaren Wert gehalten wird. In der DE 1 739 099 U wird es auch beschrieben, eine thermobimetallbetätigte Vorrichtung mit einem Magneten zu versehen, so dass sie beim Ansetzen an der Wandung eines Kochtopfes magnetisch gehalten wird. In der DE 1 739 099 U wird ferner beschrieben, dass ein Überwachungsglied, z.B. ein Bimetallregler, unter Vermittlung eines oder mehrerer Saugnäpfe aus elastischem Werkstoff, z.B. Natur- oder Silikon-Kautschuk, an der zu überwachenden Stelle festlegbar ist.

DE 41 29 196 A1 offenbart eine Vorrichtung zur Regelung der Heizleistung einer Kochstelle, insbesondere für einen Elektroherd, mit Hilfe eines an der Außenwand des Kochgefäßes anliegenden Wandberührungssensors, mit dem der Ist-Wert der Temperatur des Gefäßinhalts näherungsweise festgestellt wird. Der Wandberührungssensor soll zur bequemen Benutzung in Verbindung mit einer ebenflächigen Heizfläche ausgebildet werden. Dies wird dadurch erreicht, dass der Wandberührungssensor in Verbindung mit einem auf der Herdplatte bzw. auf dem Kochfeld befestigten Anlagestück gehaltert ist.

EP 0 779 051 A1 offenbart einen Topf für eine sensorgesteuerte Garungseinheit, die aus Gargerät, Sensorik und Kochfeld besteht, wobei ein der sensorgesteuerten Garungseinheit zugeordneter Infrarotsensor kochstellenbezogen leicht erhöht oberhalb des Kochfeldes angeordnet und in einer konstruktiven Funktionseinheit integriert ist, so dass in der sensorgesteuerten Garungseinheit Kochfeld, Gargerät und Sensorik systemhaft miteinander verbunden, aufeinander angepasst und optimierbar sind, wobei eine Systemertüchtigung zum Infrarotsensor-Garen für Normaltöpfe durch eine Beschichtung mit Folie, Lack oder anderen Mitteln herbeiführbar ist, wobei diese Beschichtung eine restlos lösbare ist.

US2004/0057493 A1 und EP2515091 A1 offenbaren Vorrichtungen zum berührungslosen Abfühlen einer Temperatur.

Es ist die **Aufgabe** der vorliegenden Erfindung, die Nachteile des Standes der Technik zumindest teilweise zu überwinden und insbesondere eine verbesserte Möglichkeit zur berührungslosen Temperaturabfühlung an einem Gargeschirr der betreffenden Art bereitzustellen. Insbesondere soll eine besser reproduzierbare Temperaturabfühlung ermöglicht werden.

Diese Aufgabe wird gemäß den Merkmalen der unabhängigen Ansprüche gelöst. Bevorzugte Ausführungsformen sind insbesondere den abhängigen Ansprüchen entnehmbar. Die Aufgabe wird gelöst durch eine Temperaturabfühlvorrichtung zum berührungslosen Abfühlen einer Temperatur eines Gargeschirrs nach Anspruch 1.

Dabei wird ausgenutzt, dass ein Nutzer der Temperaturabfühlvorrichtung die Durchlichtoptik typischerweise so reinigt, dass er mittels eines Tuchs über deren Vorderseite wischt. Die zugehörige Wischbewegung ist in der Regel eine Drehbewegung. Dadurch wird der innere Bereich gereinigt, während Schmutz oder andere Ablagerungen in dem schwerer zugänglichen, aber freiliegenden äußeren Bereich verbleiben oder durch die Wischbewegung sogar von dem inneren Bereich in den äußeren Bereich transportiert werden. Der äußere Bereich mag zwar grundsätzlich ebenfalls gereinigt werden, beispielsweise mittels eines Wattestäbchens o.ä., jedoch ist dies eher unüblich. Eine Schmutzablagerung verändert die Durchlasscharakteristik, so dass eine Reproduzierbarkeit und/oder eine Genauigkeit einer Temperaturmessung leiden. Dadurch, dass der äußere Bereich mittels des Gehäuses gegenüber dem IR-Sensor abgeschattet ist, liegt er nicht mehr im Sichtfeld des IR-Sensors und beeinflusst damit auch das Messverhalten des IR-Sensors nicht. So wird eine besser reproduzierbare und ggf. auch genauere Temperaturabfühlung oder Temperaturmessung ermöglicht.

Die Temperaturabfühlvorrichtung mag insbesondere zum berührungslosen Abfühlen einer Temperatur einer Seitenwand eines Gargeschirrs vorgesehen sein.

Das Gehäuse besteht zur Unterdrückung einer Wärmeleitung bevorzugt aus Kunststoff.

Der IR-Sensor ist ein berührungslos arbeitender IR-Sensor. Er mag zur Umwandlung von infraroter (IR-) Strahlung ein oder mehrere Sensorelemente aufweisen, z.B. Thermosäulen oder "Thermopiles". Dies ermöglicht eine besonders verzögerungsarme und damit schnelle Temperaturerfassung. Zudem ist eine berührungslose Temperaturmessung wenig fehleranfällig.

Der IR-Sensor mag einen Boden oder Sockel zur Anordnung des mindestens einen Sensorelements aufweisen. Der Sockel mag auch mindestens ein elektrisches Anschlusselement aufweisen, z.B. mindestens einen durch den Sockel durchgeführten elektrischen Anschluss. Der IR-Sensor mag ferner mindestens eine Verarbeitungsschaltung zur Verarbeitung der von dem mindestens einen Sensorelement ausgegebenen Messsignale aufweisen, z.B. zu ihrer Digitalisierung. Die Verarbeitungsschaltung mag zusammen mit dem mindestens einen Sensorelement auf einer gemeinsamen Platine angeordnet sein. Die Platine mag zur effektiven Wärmespreizung und Wärmeabfuhr eine Metallkernplatine sein.

Der IR-Sensor weist ferner ein mit dem Sockel verbundenes Abdeckelement auf, insbesondere in Form einer Kanne, speziell einer metallischen Kanne. Das Abdeckelement weist im Sichtfeld des mindestens einen Sensorelements eine Öffnung ("Strahlungseintrittsöffnung") zum Eintritt von IR-Strahlung auf das mindestens eine Sensorelement auf. Die Strahlungseintrittsöffnung ist bevorzugt für von dem mindestens einen Sensorelement detektierbares IR-Licht durchlässig.

Der IR-Sensor ist also dazu eingerichtet und angeordnet, durch die Öffnung in dem Gehäuse und dabei durch den inneren Bereich der IR-Durchlichtoptik einfallende Lichtstrahlung zu detektieren.

Es ist eine Ausgestaltung, dass die IR-Durchlichtoptik auf einer nach vorne (d.h. in Richtung des abzufühlenden Gargeschirrs) gerichteten Stufe des Gehäuses im Bereich der Öffnung angeordnet ist und die Stufe als Blende gegenüber dem IR-Sensor dient. Diese Ausgestaltung weist den Vorteil auf, dass die IR-Durchlichtoptik einfach montierbar ist, z.B. durch Aufsetzen auf die mit einem Haftmittel versehene Stufe. Zudem ist eine Stufe einfach bei der Herstellung des Gehäuses berücksichtigbar, z.B. durch entsprechende Gestaltung eines Werkzeugs. So kann die Stufe an einem spritzgegossenen Gehäuse ohne Einbringung eines Hinterschnitts umgesetzt werden. Die Stufe ist vorzugsweise eine umlaufend geschlossene Stufe.

Es ist noch eine Ausgestaltung, dass die IR-Durchlichtoptik im Bereich ihres Seitenrands in einer Aussparung des Gehäuses zumindest formschlüssig gehalten wird. Dies bewirkt vorteilhafterweise einen besonders sicheren Sitz der IR-Durchlichtoptik. Die Aussparung mag beispielsweise eine umlaufende Ringnut sein. Eine Tiefe der Aussparung ist vorzugsweise so gering, dass die IR-Durchlichtoptik in die Aussparung einschnappbar ist, insbesondere durch elastische Verformung der IR-Durchlichtoptik und/oder des Gehäuses.

Es ist eine weitere Ausgestaltung, dass die IR-Durchlichtoptik in ihrem Kontaktbereich mit dem Gehäuse zumindest teilweise IR-reflektierend ausgebildet ist. Dadurch wird vorteilhafterweise eine Einstreuung von Wärmestrahlung von dem Gehäuse in die IR-Durchlichtoptik unterdrückt. Die IR-Durchlichtoptik mag in ihrem Kontaktbereich insbesondere hochgradig glatt oder glänzend ausgebildet sein. Die IR-Durchlichtoptik mag in ihrem Kontaktbereich insbesondere IR-verspiegelt ausgebildet sein, z.B. durch Vorsehen einer entsprechenden Beschichtung.

Es ist noch eine weitere Ausgestaltung, dass die IR-Durchlichtoptik zumindest an ihrer Vorderseite mit einer Hartbeschichtung versehen ist. Die Hartbeschichtung mag insbesondere eine Carbonbeschichtung sein. Dies sichert eine gute Reproduzierbarkeit der Temperaturmessung auch nach wiederholtem Abwischen der IR-Durchlichtoptik.

Es ist ferner eine Ausgestaltung, dass die IR-Durchlichtoptik IR-strahlungsdämpfend ausgebildet ist. So wird der Vorteil erzielt, dass die durchgelassene IR-Strahlung auf eine Intensität einstellbar ist, welche einerseits eine genaue Messung der Temperatur zulässt, andererseits aber eine Aufwärmung des IR-Sensors durch die einfallende IR-Strahlung gering hält. Auch dies unterstützt eine Reproduzierbarkeit der Temperaturmessung.

In der Öffnung mag sich mindestens eine IR-Durchlichtoptik befinden, also entweder eine einzelne IR-Durchlichtoptik oder mehrere IR-Durchlichtoptiken, die vorzugsweise hintereinander geschaltet sind.

Es ist auch eine Ausgestaltung, dass die IR-Durchlichtoptik ein strahlformbewahrendes Fenster ist oder aufweist. Durch ein solches Fenster wird eine Form des einfallenden IR-Lichtbündels praktisch nicht verändert. Ein solches Fenster mag z.B. in Form einer scheibenförmigen Platte vorliegen.

Es ist außerdem eine Ausgestaltung, dass die IR-Durchlichtoptik strahlformend ist, insbesondere eine IR-Linse ist. So kann ein Öffnungswinkel des Sichtfensters auf einfache Weise eingestellt werden.

Es ist eine Weiterbildung, dass die Temperaturabfühlvorrichtung dazu eingerichtet ist, für ihren Betrieb an einem Gargeschirr befestigt zu sein. Dies mag durch direkte Befestigung an dem Gargeschirr geschehen, z.B. durch eine magnetische Haftung, oder indirekt über einen an dem Gargeschirr befestigten Adapter. Die Temperaturabfühlvorrichtung ist insbesondere eine eigenständig durch einen Nutzer des Gargeschirrs handhabbare Vorrichtung.

Es ist zudem eine Ausgestaltung, dass die Temperaturabfühlvorrichtung mit ihrer Vorderseite auf einen an dem Gargeschirr angebrachten Adapter aufsetzbar ist. Dies ermöglicht eine Anbringung, welche die Reproduzierbarkeit der Temperaturmessung noch weiter unterstützt. Denn der Adapter ermöglicht eine immer gleiche Ausrichtung der Temperaturabfühlvorrichtung in Bezug auf das Gargeschirr, an welchem der Adapter befestigt ist. Zudem mag der Adapter so ausgebildet sein, dass er nicht von dem Gargeschirr abgestrahltes IR-Streulicht blockiert. Ferner mag der Adapter einen in dem Sichtfeld des IR-Sensors liegenden Bereich aufweisen, welcher mit dem Gargeschirr thermisch gekoppelt ist (indem der Bereich z.B. flächig an dem Gargeschirr aufliegt) und definierte IR-Abstrahlbedingungen erfüllt. Folglich misst der IR-Sensor die Temperatur dieses Bereichs, so dass die Temperaturmessung nicht durch ein Material oder eine Oberflächenbeschaffenheit des Gargeschirrs im Sichtfeld des IR-Sensors verfälscht wird.

Der Adapter ist insbesondere elastisch soweit verformbar, dass er großflächig auch auf eine gekrümmte Außenseite eines Gargeschirrs aufsetzbar ist. Die Temperaturabfühlvorrichtung ist an dem Adapter insbesondere magnetisch haftend befestigbar.

Es ist noch eine Ausgestaltung, dass die Temperaturabfühlvorrichtung eine Kommunikationseinrichtung zur Übertragung zumindest von abgefühlten oder gemessenen Temperaturwerten aufweist. So wird eine besonders vielseitige und flexible Erwärmung von Gargut ermöglicht. Die Kommunikationseinrichtung mag Daten insbesondere drahtlos übertragen, z.B. über Funk, beispielsweise auf der Grundlage eines Bluetooth-Protokolls, oder über eine IR-Datenverbindung. Die Temperaturabfühlvorrichtung mag über die Kommunikationseinrichtung auch Statusdaten übertragen, z.B. über eine Betriebsbereitschaft, ein Abschalten, ein Vorliegen einer niedrigen Batteriespannung, eine mögliche oder bereits eingetretene Überhitzung usw.

Die Temperaturabfühlvorrichtung nach der Erfindung weist ferner auf: ein Gehäuse mit einem darin angeordneten IR-Sensor mit mindestens einem Sensorelement, welcher IR-Sensor ein Abdeckelement aufweist, das im Sichtfeld des mindestens einen Sensorelements eine Strahlungseintrittsöffnung aufweist, wobei das Abdeckelement an dem Gehäuse aufliegt und das Abdeckelement mit mindestens einem in dem Gehäuse untergebrachten Wärmespreizungselement wärmeleitend verbunden ist. Dadurch wird eine Temperaturdifferenz an der Abdeckung vermindert, welche sich zwischen einer Auflagefläche mit dem Gehäuse und anderen Bereichen der Abdeckung bildet. Dazu stellt das Wärmespreizungselement eine thermische Masse bereit, auf welche sich die in der Abdeckung gespeicherte Wärme übertragen lässt, was einen Abbau von Wärmespitzen und damit eine Vereinheitlichung eines Temperaturniveaus der Abdeckung bewirkt. Ein Wärmeübertrag von dem Gehäuse auf die Abdeckung kann sich beispielsweise durch die Nähe des Gehäuses zu dem Gargeschirr, an welchem es befestigt ist, oder durch eine direkte Strahlungseinwirkung einer teilweise freiliegenden Kochstelle ergeben. Diese Temperaturdifferenz wirkt einer Einhaltung einer Messgenauigkeit entgegen, da sie eine ungleichmäßige, schwer erfassbare Messumgebung für das mindestens eine in dem IR-Sensor untergebrachte Sensorelement erzeugt. Jedoch wird zur genauen Berechnung einer Temperatur mittels des IR-Sensors eine gleichmäßige Erwärmung der Abdeckung vorausgesetzt und diese Temperatur ggf. auch lokal an der Abdeckung gemessen, z.B. mittels einer in dem IR-Sensor untergebrachten Temperaturmesseinrichtung, insbesondere eines Kontakttemperatursensors. Stimmt die tatsächliche Temperatur der Abdeckung nicht über das gesamte Sichtfeld des mindestens einen Sensorelements mit der von der Temperaturmesseinrichtung ermittelten Temperatur überein, kommt es zu Messfehlern. Dies ist insbesondere der Fall bei einer Verwendung von Thermosäulen als Sensorelement(en).

Das Wärmespreizungselement weist eine ausreichende thermische Masse und damit Wärmeaufnahmekapazität auf, um die Temperaturspitzen der Abdeckung praktisch sinnvoll zu reduzieren.

Das Wärmespreizungselement mag insbesondere auch als Kühlkörper dienen und dazu insbesondere eine dedizierte (nur für diesen Zweck vorgesehene) Kühlstruktur aufweisen, z.B. umfassend Kühlrippen, Kühlstifte usw.

Dass ein Wärmespreizungselement mit der Abdeckung wärmeleitend verbunden ist, mag insbesondere umfassen, dass das Wärmespreizungselement an der Abdeckung aufliegt. Dies mag in direktem Kontakt oder über eine dünne Schicht mit geringem Wärmewiderstand geschehen. Der direkte Kontakt mag z.B. durch einen Reibschluss und/oder einen Stoffschluss (z.B. durch ein Verschweißen) hergestellt werden. Die dünne Schicht mag beispielsweise eine doppelseitig klebende Folie, eine Lotschicht oder eine Schicht aus Wärmeleitpaste o.ä. sein.

Ein Wärmespreizungselement mag mit der Abdeckung auch über eine dedizierte Wärmebrücke verbunden sein. Eine dedizierte Wärmebrücke ist insbesondere ein speziell zur Wärmeleitung vorgesehenes, gut wärmeleitendes Element, insbesondere mit einer Wärmeleitfähigkeit von mehr als 10 W / (m·K). Die Wärmebrücke mag insbesondere ein Element sein, durch welches kein Betriebsstrom fließt, also kein "Leitungselement" ist. Als Wärmebrücke mag also insbesondere nicht eine elektrische Leiterbahn, ein elektrischer Anschluss oder ein elektrischer Verbindungsdraht verstanden werden. Das Material der Wärmebrücke mag elektrisch leitfähig sein, z.B. aus Metall, oder mag elektrisch isolierend sein, z.B. aus Keramik, z.B. aus AIN.

Es ist eine Ausgestaltung, dass das Abdeckelement eine metallische Kanne ist. Die metallische Kanne mag insbesondere aus Eisenblech, Aluminium oder Kupfer bestehen. Die metallische Kanne ermöglicht vorteilhafterweise eine effektive Wärmeableitung innerhalb der Abdeckung und damit bereits eine verbesserte Homogenisierung der Temperatur der Abdeckung. Außerdem ist eine solche Abdeckung einfach und preiswert herstellbar. Zudem lassen sich Wärmespreizelemente einfach und mit geringem Wärmeübergangswiderstand anbringen, z.B. durch Anlöten, Anschweißen oder Ankleben.

Es ist erfindungsgemäß vorgesehen, dass die Strahlungseintrittsöffnung vorderseitig an dem Abdeckelement angeordnet ist und das mindestens eine Wärmespreizungselement an einer Seitenwand der Abdeckung anliegt. Die Strahlungseintrittsöffnung ist aus dem Gehäuse herausgerichtet. Diese Ausgestaltung ermöglicht eine einfache und präzise Befestigung des IR-Sensors an dem Gehäuse, insbesondere im Bereich seiner Vorderseite, und ferner eine großflächige Anbindung des Wärmespreizungselements bzw. einer zugehörigen Wärmebrücke.

Es ist eine weitere Ausgestaltung, dass mindestens ein Wärmespreizungselement an dem Gehäuse aufliegt. So kann bereits Wärme des Gehäuses im Bereich des IR-Sensors abgeführt werden, wodurch sich ein Wärmeübertrag auf den IR-Sensor verringert und sich folglich eine Temperaturdifferenz in der Abdeckung vermindert.

Es ist noch eine weitere Ausgestaltung, dass das Wärmespreizungselement ein an dem Abdeckelement auf- oder anliegender metallischer Körper ist. Dies ergibt eine besonders starke und schnelle Wärmeableitung von der Abdeckung auf das Wärmespreizungselement. Der Körper mag z.B. aus Stahl, Aluminium oder Kupfer bestehen. Das Wärmespreizungselement mag insbesondere ein dediziertes Wärmespreizungselement sein, das keine Funktion außer einer Wärmeableitung von der Abdeckung aufweist.

Das Wärmespreizungselement ist für eine einfache Anbringung und eine große Wärmeübertragungsfläche insbesondere als ein Ring ausgestaltet. Der Ring mag insbesondere auf eine Seitenwand der Kanne aufgezogen sein. Der Ring mag auch als Kühlkörper dienen und ausgebildet sein.

Es ist außerdem eine Ausgestaltung, dass das mindestens eine Wärmespreizungselement mindestens ein Funktionselement der Temperaturabfühlvorrichtung ist. Dadurch werden Elemente der Temperaturabfühlvorrichtung zur Wärmeableitung von der Abdeckung herangezogen, die auch, insbesondere primär, eine andere Funktion aufweisen, sich aber auch als Wärmespreizungselement eignen. Dies erlaubt einen besonders preiswerten und kompakten Aufbau der Temperaturabfühlvorrichtung.

Es ist auch eine Ausgestaltung, dass ein Wärmespreizungselement, insbesondere ein Funktionselement, mit dem Abdeckelement über eine dedizierte Wärmebrücke verbunden ist. So lässt sich eine vielgestaltige und flexible Positionierung des Wärmespreizungselements, insbesondere Funktionselements, in dem Gehäuse erreichen. Die Wärmebrücke mag z.B. ein Metallstreifen sein. Die Verwendung eines Metallstreifens weist den Vorteil auf, dass sich dieser flächig um eine Seitenwand der Abdeckung herum auflegen lässt.

Es ist ferner eine Ausgestaltung, dass ein mit der Abdeckung verbundenes Funktionselement eine Batteriehalterung und/oder eine Batterie ist. Eine Nutzung der Batteriehalterung als wärmespreizendes Funktionselement weist den Vorteil auf, dass die Batteriehalterung als Blechteil sich einfach über eine Wärmebrücke mit der Abdeckung thermisch verbinden lässt.

Es ist auch noch eine Ausgestaltung, dass die Temperaturabfühlvorrichtung mindestens einen magnetisch anziehbaren Körper zur magnetischen Befestigung der Temperaturabfühlvorrichtung aufweist und der magnetisch anziehbare Körper ein mit der Abdeckung verbundenes Funktionselement ist.

Es ist zudem eine Ausgestaltung, dass eine in dem IR-Sensor untergebrachte Metallkernplatine ein mit der Abdeckung verbundenes Funktionselement ist. So lässt sich ein besonders kompakter Aufbau erreichen. Insbesondere lässt sich ein Metallkern der Metallkernplatine mit der Abdeckung thermisch verbinden, beispielsweise über einen oder mehrere metallische Streifen, welche einerseits innen an der Abdeckung angebracht sind und andererseits an freiliegenden Bereichen der Metallkernplatine oder an thermischen Vias zu dem ansonsten bedeckten Metallkern.

Es ist noch eine Ausgestaltung, dass eine Abschirmung ein mit der Abdeckung verbundenes Funktionselement ist. Die Abschirmung mag z.B. zum Schutz von Funktionselementen der Temperaturabfühlvorrichtung gegenüber magnetischen Wechselfeldern dienen. Dies mag insbesondere zur Verwendung mit Induktionskochfeldern vorteilhaft sein. Diese Ausgestaltung weist den Vorteil auf, dass eine Abschirmung eine eher große Masse aufweist, wodurch eine hohe thermische Masse erreicht wird, und zudem flächig verteilt ist, was eine Wärmeableitung von der Abschirmung erleichtert.

Die Aufgabe wird auch gelöst durch ein Gargeschirr, das mit mindestens einer Temperaturabfühlvorrichtung wie oben beschrieben ausgerüstet ist.

Insbesondere falls die Temperaturabfühlvorrichtung eine Kommunikationseinrichtung zur Übertragung von abgefühlten oder gemessenen Temperaturwerten aufweist, wird die Aufgabe auch gelöst durch ein System aus einem Gargeschirr und einem Gargerät, wobei das Gargerät insbesondere eine Kommunikationseinrichtung zum Empfang der von der Temperaturabfühlvorrichtung übermittelten Temperaturwerte aufweist.

Das Gargerät ist insbesondere dazu eingerichtet, einen Energieübertrag auf das Gargeschirr auf einer Grundlage der übertragenen Temperaturwerte anzupassen. Dadurch wird insbesondere eine Regelung oder Steuerung einer Temperatur des Kochgeschirrs oder des in dem Kochgeschirr befindlichen Garguts auf eine durch einen Nutzer oder durch ein Garprogramm vorgebbare Soll-Temperatur ermöglicht. Das Gargerät mag auch dazu eingerichtet sein, einen Energieübertrag auf einer Grundlage von durch die Temperaturabfühlvorrichtung übermittelter Statusinformation anzupassen, z.B. eine Kochstelle abzuschalten, falls die Temperaturabfühlvorrichtung eine Überhitzung signalisiert.

Die Energieübertragung von der Kochstelle auf das Gargeschirr mag z.B. durch Wärmestrahlung (z.B. bei Heizkörper aufweisenden Kochstellen) oder mittels eines magnetischen Wechselfelds (z.B. bei einem Induktionskochfeld) geschehen.

Das Gargerät weist vorzugsweise ein Kochfeld auf. Es mag beispielsweise ein eigenständiges Kochfeld oder eine Ofen/Kochfeld-Kombination sein, z.B. ein Herd mit einem Backofen und einem darüber angeordneten Kochfeld.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.
- Fig.1: zeigt als Querschnitt in Seitenansicht ein Gargeschirr mit einer daran über einen Adapter befestigten Temperaturabfühlvorrichtung gemäß einem ersten Ausführungsbeispiel;
- Fig.2: zeigt einen vergrößerten Ausschnitt der Fig.1;
- Fig.3: zeigt als Querschnitt in Seitenansicht ein Gargeschirr mit einer daran über einen Adapter befestigten Temperaturabfühlvorrichtung gemäß einem zweiten Ausführungsbeispiel; und
- .Fig.4: zeigt eine Funktionsskizze der Temperaturabfühlvorrichtung.

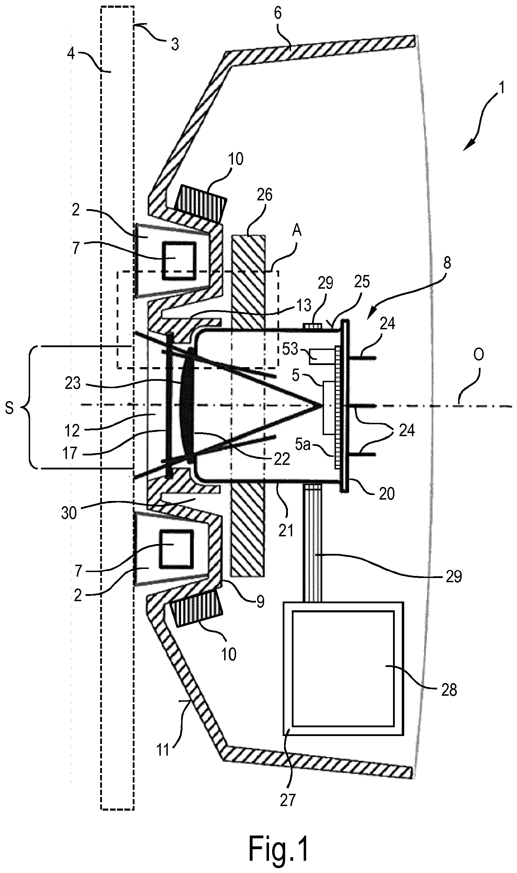

**Fig.1** zeigt als Querschnitt in Seitenansicht eine berührungslos arbeitende Temperaturabfühlvorrichtung 1, welche über einen Adapter 2 magnetisch und also lösbar an einer seitlichen Außenseite 3 einer Seitenwand eines Gargeschirrs in Form eines Kochtopfs 4 befestigt ist. Die Temperaturabfühlvorrichtung 1 ist vorzugsweise in der Nähe eines Bodens des Kochtopfs 4 befestigt, um eine Gartemperatur von in dem Kochtopf 4 befindlichem Gargut auch bei einem nur teilweise gefüllten Kochtopf 4 zuverlässig bestimmen zu können. Die Temperaturabfühlvorrichtung 1 weist ein Gehäuse 6 mit einer scheiben- oder puckähnlichen Grundform auf.

Der Adapter 2 ist ringförmig ausgebildet und mit der Außenseite 3 des Kochtopfs 4 lösbar oder unlösbar verbunden, z.B. daran angeklebt. Der Adapter 2 ist dabei ausreichend elastisch, um sich an die gekrümmte Außenseite 3 des Kochtopfs 4 anschmiegen zu können und sie flächig kontaktieren zu können. Der Adapter 2 ist dazu aus einem elastischen, thermisch beständigen Grundmaterial wie Silikon hergestellt, wobei darin ein ferromagnetischer Ring 7 eingebettet ist. Ein Sichtfeld S der Temperaturabfühlvorrichtung 1 wird durch den Adapter 2 in Bezug auf eine optische Achse O der Temperaturabfühlvorrichtung 1 seitlich umschlossen. Das Sichtfeld S bildet auf der Außenseite 3 des Kochtopfs 4 einen Messfleck. Der Adapter 2 dient folglich auch als umlaufender seitlicher Schutz, z.B. zum Abhalten einer mechanischen oder chemischen Beanspruchung. In dem Grundmaterial des Adapters 2 ist Ruß als Füllstoff verteilt, so dass der Adapter 2 zudem lichtundurchlässig ist und zum Abhalten von Störstrahlung auf das Sichtfeld S dient.

Die Temperaturabfühlvorrichtung 1 weist einen auf die Außenseite 3 des Kochtopfs 4 gerichteten, berührungslos arbeitenden IR-Sensor 8 auf, der z.B. einen oder mehrere Thermosäulen ("Thermopiles") 5 aufweisen kann. Die Temperaturabfühlvorrichtung 1 mag dadurch berührungslos eine Temperatur an der Außenseite 3 des Kochtopfs 4 abfühlen. Die hier dargestellte eine Thermosäule 5 ist, ggf. zusammen mit einer Elektronik 52, 53 in Form eines ASICs auf einer Metallkernplatine 5a untergebracht.

In einer Variante weist der Adapter 2 einen Boden (o. Abb.) auf, welcher in dem Sichtfeld S liegt und eine direkte Sicht des IR-Sensors 8 auf die Außenseite 3 des Kochtopfs 4 verhindert. Der Boden liegt insbesondere flächig auf der Außenseite 3 des Kochtopfs 4 auf, so dass eine Temperatur des Kochtopfs 3 effektiv auf den Boden übertragbar ist. Der Boden dient insbesondere zur Bereitstellung einer bekannten IR-Abstrahlcharakteristik unabhängig von der Art der Außenseite 3 des Kochtopfs 3, z.B. von dem zugehörigen Material oder seiner Oberflächenbeschaffenheit.

Die Temperaturabfühlvorrichtung 1 weist einen dem Adapter 2 zugewandten, vorderseitigen Befestigungsgegenbereich in Form eines ringförmig umlaufenden Rücksprungs 9 auf, der auf den Adapter 2 aufsetzbar ist. Die Temperaturabfühlvorrichtung 1 mag z.B. mit dem Rücksprung 9 klemmend auf den Adapter 2 aufgesteckt sein. Für eine besonders sichere, aber dennoch einfach lösbare Verbindung der Temperaturabfühlvorrichtung 1 an dem Adapter 2 weist das Gehäuse 6 innenseitig einen dauermagnetischen oder magnetisch anziehbaren Körper auf, nämlich hier einen an einer Seitenwand des Befestigungsbereichs 9 angeordneten dauermagnetischen Ring 10. Der dauermagnetische Ring 10 der Temperaturabfühlvorrichtung 1 zieht den ferromagnetischen Ring 7 des Adapters 2 an. Anstelle eines ferromagnetischen Rings 7 mag z.B. auch der Ring 10 ferromagnetisch sein, während der Ring 7 dauermagnetisch ist. Auch können beide Ringe 7 und 10 dauermagnetisch sein. Anstelle eines Rings 7 mögen in dem elastischen Basismaterial auch eisenhaltige oder magnetische Partikel als Füllmaterial verteilt sein.

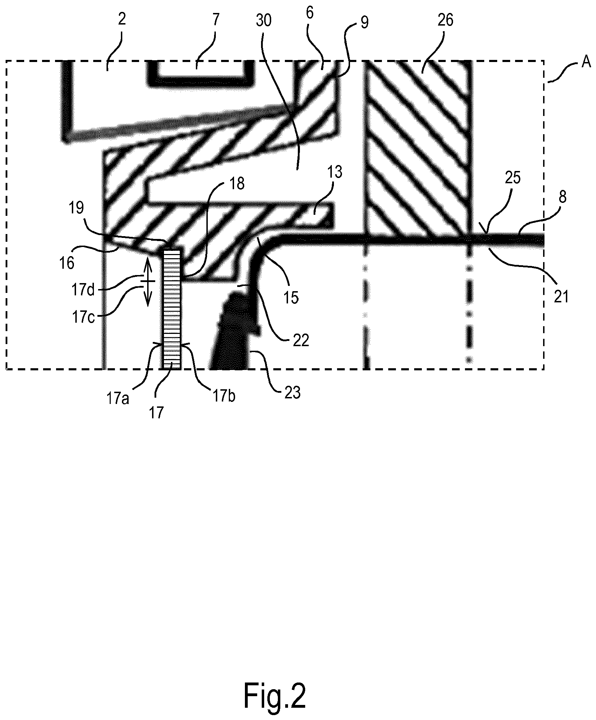

In der Mitte einer der dem Kochtopf 4 zugewandten Vorderseite 11 des Gehäuses 6 der Temperaturabfühlvorrichtung 1 befindet sich eine Öffnung 12, in welche der IR-Sensor 8 ragt. Wie in einem vergrößerten Ausschnitt A in **Fig.2** dargestellt, ist die Öffnung 12 mittels eines in das Gehäuse 6 hinein gerichteten Kragens 13 begrenzt, welcher eine Aufsatzstufe 15 zum Aufsatz des IR-Sensors 8 aufweist.. Der IR-Sensor 8 mag dort z.B. mit dem Kragen 13 verklebt sein.

An einer Innenwand 16 des Kragens 13 ist ein für IR-Strahlung durchlässiges Fenster 17 vorhanden. Das Fenster 17 mag als IR-Filter ausgebildet sein, um insbesondere nur einen spektralen Bereich des Infrarotlichts durchzulassen, der zumindest größtenteils von der Thermosäule 5 detektierbar oder sensierbar ist. Das Fenster 17 mag auch dazu eingerichtet sein, die durchgelassene IR-Strahlung zu dämpfen, insbesondere auf ein Niveau, welches eine genaue Messung der Temperatur zulässt, aber eine Aufwärmung des IR-Sensors 8 durch die einfallende IR-Strahlung gering hält.

Um eine sich durch wiederholtes Reinigen des Fensters 17 verringernde Messgenauigkeit zu verhindern, ist das Fenster 17 zumindest an seiner dem Kochtopf 4 zugewandten Vorderseite 17a mit einer Hartbeschichtung versehen. Die Hartbeschichtung mag z.B. eine Carbonbeschichtung sein.

Zur Befestigung des Fensters 17 ist in einer Innenwand 16 eine geschlossen umlaufende Stufe 18 vorhanden, welche nach vorne (d.h. im befestigten Zustand der Temperaturabfühlvorrichtung 1 in Richtung des Kochtopfs 4) ausgerichtet ist. Das Fenster 17 wird zu seiner Montage von außen auf die Stufe 18 aufgesetzt und dort mit seiner Rückseite 17b befestigt, z.B. verklebt. Zusätzlich oder anstelle einer Verklebung mag das Fenster 17 in einer direkt oberhalb der Stufe 18 befindlichen seitlichen Ringnut 19 des Kragens 13 klemmend und/oder formschlüssig eingesetzt sein.

Mittels der Stufe 18 wird erreicht, dass ein innerer, freistehender Bereich 17c des Fensters 17, welcher nicht auf der Stufe 18 aufsitzt, weitgehend frei von Schmutz usw. gehalten werden kann. Ein äußerer, ringförmiger Bereich 17d des Fensters 17, welcher auf der Stufe 18 aufsitzt, mag hingegen schmutzbehaftet sein, ohne dass eine Messgenauigkeit der IR-Sensors 8 leidet. Dabei wird berücksichtigt, dass ein Nutzer typischerweise das Fenster 17 mittels eines Tuchs o.ä. reinigt und dabei üblicherweise das Tuch auf dem Fenster 17 dreht. So kann der innere Bereich 17c des Fensters 17 effektiv gereinigt werden, während der äußere Bereich 17d meist nicht gereinigt wird und sogar zusätzlich mit Schmutz u. dgl. belegt wird. Jedoch blockiert die Stufe 18 eine Sicht des IR-Sensors 8 auf den äußeren Bereich 17d des Fensters 17. Ein Einfallen von infraroter Streustrahlung durch den äußeren Bereich 17d des Fensters 17 in den IR-Sensor 8 wird verhindert und so ein gleichförmiges IR-Einstrahlverhalten erreicht, was wiederum ein reproduzierbares Messverhalten verbessert.

Ausgehend von dem Fenster 17 weitet sich die Innenwand 16 des Kragens 13 nach vorne auf. Die Innenwand 16 mag dort insbesondere eine kegelschnittartige Form aufweisen. Dadurch behindert der Kragen 13 dort das Sichtfeld des IR-Sensors 8 nicht.

Der IR-Sensor 8 weist einen Sockel 20 auf, auf dem eine metallische Kanne 21 aufsitzt. Die Kanne 21 weist an ihrer dem Fenster 17 zugewandten Stirnseite eine Strahlungseintrittsöffnung 22 auf, durch die IR-Strahlung auf mindestens ein in dem IR-Sensor 8 befindliches IR-Sensorelement fallen kann. Auch die Thermosäule 5 ist über die Metallkernplatine 5a an dem Sockel 20 angeordnet. Die Strahlungseintrittsöffnung 22 ist mittels einer IR-Linse 23 abgedeckt, welche einen (halben) Öffnungswinkel des Sichtfelds S des IR-Sensors 8 leicht verringert, z.B. auf 11 Grad. Die Linse 23 mag ebenfalls als IR-Filter ausgebildet sein, um insbesondere nur einen spektralen Bereich des Infrarotlichts einzulassen, welcher von der Thermosäule 5 detektierbar oder sensierbar ist. In dem IR-Sensor 8 mag zur Messung einer Temperatur der Kanne 21 ein weiterer Temperatursensor vorhanden sein (o. Abb.), z.B. ein Kontakttemperatursensor.

Dadurch, dass der IR-Sensor 8 mit seiner Kanne 21 teilweise auf dem Gehäuse 6, hier: auf dem Kragen 13, aufliegt, wird die Kanne 21 in dem zugehörigen Kontaktbereich stärker erwärmt als außerhalb davon, z.B. als in der Nähe des Sockels 20. Diese ungleiche Wärmeverteilung der Kanne 21 kann zu Messungenauigkeiten führen, da eine Korrelation zwischen einem an Elektroden 24 des IR-Sensors 8 abgreifbaren Messsignal und der zugehörigen beobachteten Temperatur üblicherweise für eine gleichförmig erwärmte Kanne 21 angegeben wird. Zur Verringerung der Temperaturunterschiede an der Kanne 21 besteht diese vorzugsweise aus einem gut wärmeleitenden Material, z.B. Metall. Ferner ist die Kanne 21 an ihrer Seitenwand 25 von einem Ring 26 aus gut wärmeleitendem Material, z.B. Metall, umgeben, der Ring 26 ist mit der Kanne 21 flächig verbunden, um einen Wärmewiderstand gering zu halten und einen hohen Wärmefluss von der Kanne 21 auf den Ring 26 zu erreichen. Der Ring 26 dient also als Wärmespreizungselement und hilft, die Wärme der Kanne 21 aus einem Kontaktbereich mit dem Gehäuse 6 abzuleiten. Der Ring 26 mag auch als Kühlkörper dienen, indem er Wärme an die Luft im Inneren des Gehäuses abgibt. Er mag dazu mit einer Kühlstruktur versehen sein, z.B. mit Kühlrippen, Lamellen oder Kühlstiften. Für eine besonders effektive Wärmeableitung ist der Ring 26 nahe an dem Kragen 13 angeordnet, wie gezeigt, insbesondere auf dem Kragen 13 aufsetzend, da der Ring 26 sich so besonders nahe an der Kontaktfläche der Kanne 21 zu dem Kragen 13 befindet. Der Ring 26 mag insbesondere reibschlüssig an der Kanne 21 befestigt sein, zusätzlich oder alternativ auch daran angehaftet sein, z.B. mittels einer Wärmeleitpaste.

Alternativ oder zusätzlich kann die Kanne 21 mit mindestens einem Funktionselement der Temperaturabfühlvorrichtung 1 thermisch verbunden sein. Solche in dem Gehäuse 6 befindliche Funktionselemente der Temperaturabfühlvorrichtung 1 mögen z.B. einen Energiespeicher, z.B. eine Batterie, einen Funksender, den Ring 10, eine Abschirmung (insbesondere bei Verwendung mit einem Induktionskochfeld) usw. umfassen. Auch mögen sich in oder an dem Gehäuse 6 mindestens eine Elektronik, z.B. eine Auswerteelektronik, mindestens eine Abschirmung, z.B. gegen Induktion, mindestens ein Leuchtmittel, z.B. Lampe, und/oder mindestens ein Schalter usw. befinden.

Die thermische Verbindung mit mindestens einem Funktionselement ist hier rein beispielhaft anhand einer thermischen Verbindung der Kanne 21 mit einer in dem Gehäuse 6 untergebrachten Batteriehalterung 27 mit eingesetzter Batterie 28 gezeigt. Die Batterie 28 mag z.B. eine oder mehrere 3-Volt-Knopfzellen umfassen. Die Batteriehalterung 27 ist über einen Metallstreifen 29 mit der Kanne 21 verbunden. Der Metallstreifen 29 ist an einem Ende um die Seitenwand 25 der Kanne 21 gelegt, um einen geringen Wärmewiderstand zu erreichen. Mit dem anderen Ende ist der Metallstreifen 29 mit einem metallischen Volumen der Batteriehalterung 27 verbunden, z.B. einem elektrischen Masseanschluss, und damit thermisch auch mit der vergleichsweise großen Batterie 28. In diesem Fall liegt die Kanne 21 elektrisch ebenfalls auf Masse. Insgesamt dienen also der Metallstreifen 29, die Batteriehalterung 27 und die Batterie 28 als ein Wärmespreizelement.

Zusätzlich oder alternativ mag der Metallstreifen 29 den Ring 26 kontaktieren und so zur Verstärkung der Wärmeableitfähigkeit des Rings 26 dienen.

Zusätzlich oder alternativ mag der Ring 10 mit der Kanne 21 thermisch verbunden sein, z.B. mittels mindestens eines metallischen Verbindungselements (o. Abb.).

Zusätzlich oder alternativ mag die Metallkernplatine 5a mit der Kanne 21 thermisch verbunden sein, z.B. mittels mindestens eines sog. "thermischen Vias" und/oder mittels Wärmeleitpaste.

Zur weiteren Reduzierung einer Temperaturdifferenz an der Kanne 21 ist der auf den Adapter 2 aufsetzbare Rücksprung 9 des Gehäuses 6 von dem Kragen 13 durch einen seitlichen Luftspalt 30 getrennt. Dadurch wird ein Wärmefluss der zwischen dem Adapter 2 und dem Rücksprung 9 übertragenen Wärme zu der Kanne 21 durch die vergleichsweise dünne Wand der Vorderseite 11 des Gehäuses 6 begrenzt.

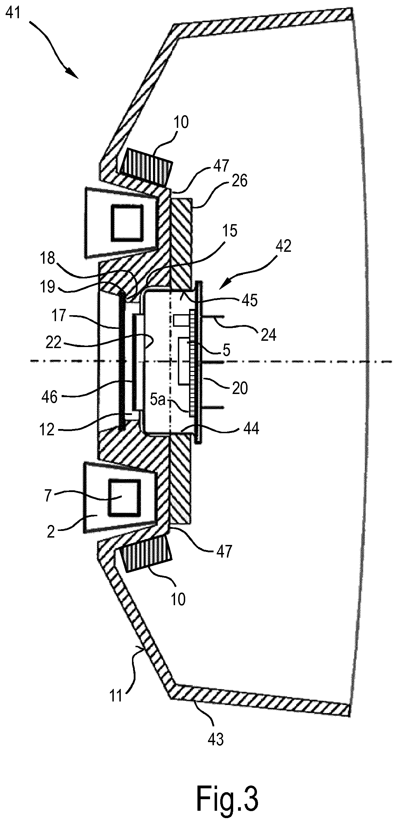

**Fig.3** zeigt als Querschnitt in Seitenansicht eine berührungslos arbeitende Temperaturabfühlvorrichtung 41, die ähnlich zu der Temperaturabfühlvorrichtung 1 aufgebaut ist. Jedoch ist nun ein flacherer IR-Sensor 42 in dem Gehäuse 43 untergebracht. Der die zugehörige flachere metallische Kanne 44 umgebende Ring 26 nimmt nun fast die gesamte freiliegende Seitenwand 45 der Kanne 44 ein, was eine besonders effektive Wärmeableitung ermöglicht. Da der Abstand von dem Fenster 17 zu der Thermosäule 5 erheblich geringer ist als bei der Temperaturabfühlvorrichtung 1, wird auf eine IR-Linse 23 zugunsten einer einfachen IR-durchlässigen Sichtscheibe 46 verzichtet. Zudem ist in diesem Ausführungsbeispiel kein Luftspalt 30 mehr vorhanden, was das Gehäuse 43 einfacher herstellen lässt. Der Rücksprung 47 dient nun vielmehr auch als ein Kragen zum Aufsatz des IR-Sensors 42 und weist dazu unter anderem die Öffnung 12 und die Aufsatzstufe 15 auf. Die Sichtscheibe 46 mag auch als IR-Dämpfer dienen.

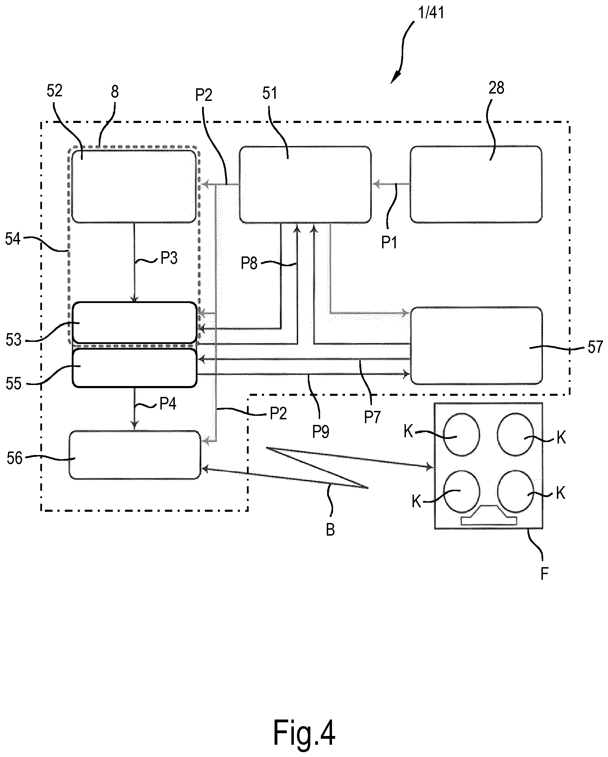

**Fig.4** zeigt eine mögliche Funktionsskizze der Temperaturabfühlvorrichtung 1 oder 41. Die Temperaturabfühlvorrichtung 1 oder 41 weist zur Stromversorgung die Batterie 28 auf. Die Batterie 28 speist eine in dem Gehäuse 6 oder 43 untergebrachte Elektronik 51, wie durch den Pfeil P1 angedeutet. Die Elektronik 51 dient zum Ein-/und Ausschalten der Temperaturabfühlvorrichtung 1 und zur Überwachung der Batterie 28, z.B. zur Überwachung einer Batteriespannung. Die Elektronik 51 kontrolliert eine Stromversorgung des IR-Sensors 8, wie durch den Pfeil P2 angedeutet.

In dem IR-Sensor 8 sind eine mit der Thermosäule 5 verbundene als Verarbeitungsschaltung dienende Messtechnik 52 (z.B. eine Messelektronik) und eine erste Datenverarbeitungseinrichtung 53 untergebracht, die hier gemeinsam auf einer Metallkernplatine 5a angeordnet sind, z.B. in Form eines ASICs 54. Die Messeinrichtung 52 dient insbesondere einer Bestimmung einer Temperatur auf den Ausgangssignalen der mindestens einen Thermosäule 5, z.B. durch Digitalisierung und Normierung der Messsignale. Die erste Datenverarbeitungseinrichtung 53 mag die von der Messtechnik 52 wie durch den Pfeil P3 angedeutet ausgegebenen Temperaturwerte weiterverarbeiten, z.B. für eine Statusbestimmung mit Schwellwerten vergleichen. Die Datenverarbeitung mag zusätzlich oder alternativ außerhalb des IR-Sensors 8 mittels einer zweiten Datenverarbeitungseinrichtung 55 durchgeführt werden. Mögliche Stati können beispielsweise eine Feststellung, dass die Thermosäule 5, der IR-Sensor 8 oder die Temperaturabfühlvorrichtung 1 oder 41 zu heiß ist, dass eine Batteriespannung der Batterie 28 zu gering ist, dass die Temperaturabfühlvorrichtung 1 eingeschaltet worden ist oder dass sich die Temperaturabfühlvorrichtung 1 ausschaltet, umfassen.

Von der bzw. den Datenverarbeitungseinrichtungen 53 und/oder 55 werden, wie durch den Pfeil P4 angedeutet, die Temperaturdaten und ggf. Stati an ein Funkmodul 56 weitergeleitet. Eine Stromversorgung des Funkmoduls 56 wird, wie durch den Pfeil P2 angedeutet, ebenfalls durch die Elektronik 51 kontrolliert. Das Funkmodul 56 kann die Temperaturdaten und ggf. Stati und weitere Information(en) über eine Funkverbindung B (z.B. nach dem Bluetooth-Protokoll) an ein Kochfeld F übertragen. Das Kochfeld F weist hier mehrere Kochstellen K auf, wobei der Kochtopf 4 auf einer dieser Kochstellen K abgelegt ist. Die Kochstellen K können zur Energieabgabe an den Kochtopf 4 z.B. Strahlungsheizkörper oder Induktionsspulen aufweisen. Das Funkmodul 56 mag unidirektional als Funksender zur Datenübermittlung nur zu dem Kochfeld dienen oder mag bidirektional auch Daten über die Funkverbindung B von dem Kochfeld F empfangen, z.B. zur Zuweisung einer Kennung.

Das Kochfeld F kann die Kochstelle K, auf der der Kochtopf 4 abgelegt ist, auf der Grundlage der von der Temperaturabfühlvorrichtung 1 oder 41 übersandten Information einstellen. Insbesondere ist ein Energieeintrag von dieser Kochstelle K auf den Kochtopf 4 einstellbar, z.B. eine elektrische Leistung und damit eine auf den Kochtopf 4 übertragene elektrische Energie. So lässt sich ein Regelkreis zum Regeln der Temperatur des Kochtopfs 4 bzw. von darin befindlichem Gargut bereitstellen. Im Vergleich zu einem Kontaktfühler wird eine besonders kurze Einschwingzeit des Regelkreises bei hoher Genauigkeit erreicht. Durch die Statusinformation mag die Kochstelle K z.B. abgeschaltet werden, falls ein Status eine Überhitzung der Temperaturabfühlvorrichtung 1 oder 41 anzeigt.

Die Elektronik 51 kontrolliert auch eine Stromversorgung einer oder mehrerer Nutzerschnittstellen 57, wie durch den Pfeil P5 angedeutet. Die mindestens eine Nutzerschnittstelle 57 mag z.B. eine oder mehrere optische und/oder akustische Anzeigeeinrichtungen wie mindestens einen Lampe, z.B. LED, und/oder einen Lautsprecher umfassen. Die Nutzerschnittstelle 57 mag z.B. auch mindestens ein Bedienelement wie eine Reset-Taste und/oder einen Ein-/Aus-Schalter umfassen. Beispielsweise mag durch ein Einschalten der Temperaturabfühlvorrichtung 1 oder 41 mittels eines Ein-/Aus-Schalters ein entsprechendes elektrisches Signal an die Elektronik 51 gesandt werden, wie durch den Pfeil P6 angedeutet. Dies mag eine Aktivierung der Elektronik 51 umfassen. Zum Ausschalten der Temperaturabfühlvorrichtung 1 oder 41 mittels des Ein-/Aus-Schalters mag dieser z.B. ein entsprechendes Ausschaltsignal an die Datenverarbeitungseinrichtung 53 und/oder 55 senden, wie durch den Pfeil P7 angedeutet. Die Datenverarbeitungseinrichtung 53 und/oder 55 mag daraufhin eine Abschaltroutine durchlaufen, welche z.B. ein Aussenden eines entsprechenden Status an das Funkmodul 56 umfasst, welches eine zugehörige Nachricht an das Kochfeld F absetzt. Die Datenverarbeitungseinrichtung 53 und/oder 55 mag dazu auch einen Ausschaltbefehl an die Elektronik 51 aussenden, wie durch den Pfeil P8 angedeutet, um diese auszuschalten, insbesondere um die Batterie 28 von der restlichen elektrischen Schaltung galvanisch zu trennen.

Die Datenverarbeitungseinrichtung 53 und/oder 55 mag auch, wie durch den Pfeil P9 angedeutet, mindestens eine Nutzerschnittstelle 57 ansteuern, z.B. eine Lampe oder einen Lautsprecher, z.B. um einen aktuellen Betriebsstatus anzuzeigen. Beispielsweise mag eine dauerleuchtende Lampe auf eine normal arbeitende Temperaturabfühlvorrichtung 1 oder 41 hindeutet, eine blinkende Lampe auf einen Fehlerfall wie eine zu niedrige Batteriespannung oder eine Überhitzung.

Selbstverständlich ist die vorliegende Erfindung nicht auf die gezeigten Ausführungsbeispiele beschränkt.

So mag beispielsweise auch die Temperaturabfühlvorrichtung 41 einen Luftspalt 30 aufweisen.

Auch mag das Fenster 17 als IR-strahlformendes Element, z.B. als IR-Linse, ausgebildet sein.

Zudem mag eine Vergussmasse mindestens einer Elektronik als thermische Masse dienen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Temperaturabfühlvorrichtung
- 2: Adapter
- 3: Außenseite eines Gargeschirrs
- 4: Kochtopf
- 5: Thermosäule
- 5a: Metallkernplatine
- 6: Gehäuse der Temperaturabfühlvorrichtung
- 7: ferromagnetischer Ring des Adapters
- 8: IR-Sensor
- 9: ringförmig umlaufender Rücksprung
- 10: dauermagnetischer Ring der Temperaturabfühlvorrichtung
- 11: Vorderseite des Gehäuses der Temperaturabfühlvorrichtung
- 12: Öffnung
- 13: Kragen
- 15: Aufsatzstufe des Kragens
- 16: Innenwand des Kragens
- 17: Fenster des Kragens
- 17a: Vorderseite des Fensters
- 17b: Rückseite des Fensters
- 17c: Innerer Bereich des Fensters
- 17d: Äußerer Bereich des Fensters
- 18: Stufe
- 19: Ringnut des Kragens
- 20: Sockel des IR-Sensors
- 21: Kanne
- 22: Strahlungseintrittsöffnung
- 23: IR-Linse
- 24: Elektrode
- 25: Seitenwand der Kanne
- 26: Ring
- 27: Batteriehalterung
- 28: Batterie
- 29: Metallstreifen
- 30: Luftspalt
- 41: Temperaturabfühlvorrichtung
- 42: IR-Sensor
- 43: Gehäuse
- 44: Kanne
- 45: Seitenwand der Kanne
- 46: IR-Sichtscheibe
- 47: Rücksprung
- 51: Elektronik
- 52: Messtechnik
- 53: erste Datenverarbeitungseinrichtung
- 54: ASIC
- 55: zweite Datenverarbeitungseinrichtung
- 56: Funkmodul
- A: Ausschnitt
- B: Funkverbindung
- F: Kochfeld
- K: Kochstelle
- N: Nutzerschnittstelle
- O: Optische Achse
- S: Sichtfeld

## Patentansprüche

1. Temperaturabfühlvorrichtung (1) zum berührungslosen Abfühlen einer Temperatur eines Gargeschirrs (4), aufweisend:
- ein Gehäuse (6) mit einem darin angeordneten, durch eine Öffnung (12) in dem Gehäuse (6) gerichteten IR-Sensor (8) und
- eine in der Öffnung (12) in Richtung des abzufühlenden Gargeschirrs vor dem IR-Sensor (8) angeordnete, für IR-Strahlung durchlässige IR-Durchlichtoptik (17),
wobei
- die IR-Durchlichtoptik (17) einen inneren Bereich (17c) und einen darum seitlich umlaufenden äußeren Bereich (17d) aufweist,
- welcher äußere Bereich (17d) mittels des Gehäuses (6) gegenüber dem IR-Sensor (8) abgeschattet ist und
- der äußere Bereich (17d) an einer in Richtung des abzufühlenden Gargeschirrs gerichteten Vorderseite (17a) der IR-Durchlichtoptik (17) zumindest teilweise freiliegt,
- der IR-Sensor (8) ein Abdeckelement (21) aufweist, das im Sichtfeld des mindestens eines Sensorelements des IR-Sensors (8) eine in Richtung des abzufühlenden Gargeschirrs vorderseitig an dem Abdeckelement (21) angeordnete Strahlungseintrittsöffnung (22) aufweist, wobei das Abdeckelement (21) an dem Gehäuse (6) aufliegt,
**dadurch gekennzeichnet, dass**
das Abdeckelement (21) mit mindestens einem in dem Gehäuse (6) untergebrachten Wärmespreizungselement (26-29) wärmeleitend verbunden ist, und
- das mindestens eine Wärmespreizungselement (26-29) an einer Seitenwand (25) des Abdeckelements (21) anliegt, sodass eine großflächige Anbindung zwischen Abdeckelement und Wärmespreizungselement bereitgestellt wird.

2. Temperaturabfühlvorrichtung (1) nach Anspruch 1, **dadurch gekennzeichnet, dass** die IR-Durchlichtoptik (17) auf einer in Richtung des abzufühlenden Gargeschirrs nach vorne gerichteten Stufe (18) des Gehäuses (6) im Bereich der Öffnung (12) angeordnet ist und die Stufe (18) als eine Blende gegenüber dem IR-Sensor (8) dient.

3. Temperaturabfühlvorrichtung (1) nach einem der vorhergehenden Ansprüche, **dadurch gekennzeichnet, dass** die IR-Durchlichtoptik (17) im Bereich ihres Seitenrands in einer Aussparung (19) des Gehäuses (6) zumindest formschlüssig gehalten wird.

4. Temperaturabfühlvorrichtung (1) nach einem der vorhergehenden Ansprüche, **dadurch gekennzeichnet, dass** die IR-Durchlichtoptik (17) in ihrem Kontaktbereich mit dem Gehäuse (6; 43) zumindest teilweise IR-reflektierend ausgebildet ist.

5. Temperaturabfühlvorrichtung (1) nach Anspruch 3, **dadurch gekennzeichnet, dass** die Aussparung (19) eine umlaufende Ringnut ist.

6. Temperaturabfühlvorrichtung (1) nach einem der Ansprüche 3 oder 5, **dadurch gekennzeichnet, dass** die die IR-Durchlichtoptik (17) in die Aussparung (19) einschnappbar ist.

7. Temperaturabfühlvorrichtung (1) nach einem der vorhergehenden Ansprüche, **dadurch gekennzeichnet, dass** die IR-Durchlichtoptik (17) in ihrem Kontaktbereich mit dem Gehäuse (6; 43) zumindest teilweise eine IR-reflektierende Beschichtung aufweist.

8. Temperaturabfühlvorrichtung (1) nach einem der vorhergehenden Ansprüche, **dadurch gekennzeichnet, dass** die IR-Durchlichtoptik (17) zumindest an ihrer Vorderseite (17a) mit einer Hartbeschichtung versehen ist.

9. Temperaturabfühlvorrichtung (1) nach einem der vorhergehenden Ansprüche, **dadurch gekennzeichnet, dass** die IR-Durchlichtoptik (17) IR-strahlungsdämpfend ausgebildet ist.

10. Temperaturabfühlvorrichtung (1) nach einem der vorhergehenden Ansprüche, **dadurch gekennzeichnet, dass** die IR-Durchlichtoptik (17) ein strahlformbewahrendes Fenster (17) ist.

11. Temperaturabfühlvorrichtung (1) nach einem der Ansprüche 1 bis 9, **dadurch gekennzeichnet, dass** die IR-Durchlichtoptik strahlformend ist, insbesondere eine IR-Linse ist.

12. Temperaturabfühlvorrichtung (1) nach einem der vorhergehenden Ansprüche, **dadurch gekennzeichnet, dass** die Temperaturabfühlvorrichtung (1) mit ihrer Vorderseite (9, 11) auf einen an dem Gargeschirr (4) angebrachten Adapter (2) aufsetzbar ist.

13. Temperaturabfühlvorrichtung (1) nach einem der vorhergehenden Ansprüche, **dadurch gekennzeichnet, dass** das Abdeckelement (21) eine metallische Kanne ist.

14. Temperaturabfühlvorrichtung (1) nach einem der vorhergehenden Ansprüche, **dadurch gekennzeichnet, dass** das mindestens eine Wärmespreizungselement (26-29) mindestens ein Funktionselement der Temperaturabfühlvorrichtung (1) ist.

15. Temperaturabfühlvorrichtung (1; 41) nach Anspruch 14, **dadurch gekennzeichnet, dass** ein Funktionselement eine Batteriehalterung (27) und/oder eine Batterie (28) ist.

## Claims

1. Temperature-sensing apparatus (1) for contactlessly sensing a temperature of an item of cookware (4), having:
- a housing (6) with an IR sensor (8) arranged therein and directed through an opening (12) in the housing (6) and
- an IR transmitted-light optic element (17) that is arranged in the opening (12) before the IR sensor (8) in the direction of the item of cookware to be sensed and is permeable for IR radiation,
wherein
- the IR transmitted-light optic element (17) has an inner region (17c) and an outer region (17d) that runs around it to the side,
- which outer region (17d) is obscured in relation to the IR sensor (8) by means of the housing (6) and
- the outer region (17d) is at least partially exposed on a front side (17a) of the IR transmitted-light optic element (17) that is directed in the direction of the item of cookware to be sensed,
- the IR sensor (8) has a cover element (21), which in the field of view of the at least one sensor element of the IR sensor (8) has a radiation entry opening (22) arranged on the front side of the cover element (21) in the direction of the item of cookware to be sensed, wherein the cover element (21) is in contact with the housing (6),
**characterised in that**
- the cover element (21) is connected in a thermally conductive manner to at least one heat spreading element (26-29) accommodated in the housing (6), and
- the at least one heat spreading element (26-29) rests against a side wall (25) of the cover element (21), so that a binding between cover element and heat spreading element over a large area is provided.

2. Temperature-sensing apparatus (1) according to claim 1, **characterised in that** the IR transmitted-light optic element (17) is arranged in the region of the opening (12) at a step (18) of the housing (6) directed towards the front in the direction of the item of cookware to be sensed and the step (18) acts as a screen in relation to the IR sensor (8).

3. Temperature-sensing apparatus (1) according to one of the preceding claims, **characterised in that** the IR transmitted-light optic element (17) is held in a recess (19) of the housing (6), at least with a positive fit, in the region of its side edge.

4. Temperature-sensing apparatus (1) according to one of the preceding claims, **characterised in that** the IR transmitted-light optic element (17) is embodied as at least partially IR-reflecting in its contact region with the housing (6; 43).

5. Temperature-sensing apparatus (1) according to claim 3, **characterised in that** the recess (19) is a circumferential annular groove.

6. Temperature-sensing apparatus (1) according to one of claims 3 or 5, **characterised in that** the IR transmitted-light optic element (17) can be snap-fitted into the recess (17).

7. Temperature-sensing apparatus (1) according to one of the preceding claims, **characterised in that** the IR transmitted-light optic element (17) has, at least partially, an IR-reflecting coating in its contact region with the housing (6; 43).

8. Temperature-sensing apparatus (1) according to one of the preceding claims, **characterised in that** the IR transmitted-light optic element (17) is provided with a hard coating, at least on its front side (17a).

9. Temperature-sensing apparatus (1) according to one of the preceding claims, **characterised in that** the IR transmitted-light optic element (17) is embodied in an IR radiation-attenuating manner.

10. Temperature-sensing apparatus (1) according to one of the preceding claims, **characterised in that** the IR transmitted-light optic element (17) is a beamform-preserving window (17).

11. Temperature-sensing apparatus (1) according to one of claims 1 to 9, **characterised in that** the IR transmitted-light optic element is beam-forming, in particular an IR lens.

12. Temperature-sensing apparatus (1) according to one of the preceding claims, **characterised in that** the temperature-sensing apparatus (1) can be attached at its front side (9, 11) to an adapter (2) that can be attached to the item of cookware (4).

13. Temperature-sensing apparatus (1) according to one of the preceding claims, **characterised in that** the cover element (21) is a metal pot.

14. Temperature-sensing apparatus (1) according to one of the preceding claims, **characterised in that** the at least one heat spreading element (26-29) is at least one functional element of the temperature-sensing apparatus (1).

15. Temperature-sensing apparatus (1; 41) according to claim 14, **characterised in that** a functional element is a battery holder (27) and/or a battery (28).

## Revendications

1. Dispositif de détection de température (1) pour la détection sans contact d'une température d'un ustensile de cuisson (4), comprenant :
- un boîtier (6) dans lequel est disposé un capteur IR (8) orienté à travers une ouverture (12) dans le boîtier (6) et
- une optique à lumière transmise IR (17) transparente au rayonnement IR, disposée dans l'ouverture (12) en direction de l'ustensile de cuisson à explorer, devant le capteur IR (8),
dans lequel
- l'optique à lumière transmise IR (17) comprend une zone interne (17c) et une zone externe (17d) latéralement périphérique autour de celle-ci,
- laquelle zone externe (17d) est occultée vis-à-vis du capteur IR (8) au moyen du boîtier (6) et
- la zone externe (17d) est au moins en partie exposée au niveau d'une face avant (17a), orientée en direction de l'ustensile de cuisson à explorer, de l'optique à lumière transmise IR (17),
- le capteur IR (8) comprend un élément de couvercle (21), lequel comprend, dans le champ de vision de l'au moins un élément de capteur du capteur IR (8), une ouverture d'entrée de rayonnement (22) disposée en direction de l'ustensile de cuisson à explorer sur la face avant au niveau de l'élément de couvercle (21), dans lequel l'élément de couvercle (21) s'appuie sur le boîtier (6),
**caractérisé en ce que**
l'élément de couvercle (21) est relié par conduction thermique à au moins un élément à expansion thermique (26 à 29) logé dans le boîtier (6),
et
- l'au moins un élément à expansion thermique (26 à 29) repose sur une paroi latérale (25) de l'élément de couvercle (21), de telle sorte que soit fournie une liaison sur une grande surface entre l'élément de couvercle et l'élément à expansion thermique.

2. Dispositif de détection de température (1) selon la revendication 1, **caractérisé en ce que** l'optique à lumière transmise IR (17) est disposée sur un palier (18), orienté vers l'avant en direction de l'ustensile de cuisson à explorer, du boîtier (6) dans la zone de l'ouverture (12) et le palier (18) sert d'obturateur vis-à-vis du capteur IR (8).

3. Dispositif de détection de température (1) selon l'une des revendications précédentes, **caractérisé en ce que** l'optique à lumière transmise IR (17) est maintenue au moins par complémentarité de forme dans la zone de son bord latéral dans une encoche (19) du boîtier (6).

4. Dispositif de détection de température (1) selon l'une des revendications précédentes, **caractérisé en ce que** l'optique à lumière transmise IR (17) réfléchit au moins en partie les IR dans sa zone de contact avec le boîtier (6 ; 43).

5. Dispositif de détection de température (1) selon la revendication 3, **caractérisé en ce que** l'encoche (19) est une rainure annulaire périphérique.

6. Dispositif de détection de température (1) selon l'une des revendications 3 ou 5, **caractérisé en ce que** l'optique à lumière transmise IR (17) peut être encliquetée dans l'encoche (19).

7. Dispositif de détection de température (1) selon l'une des revendications précédentes, **caractérisé en ce que** l'optique à lumière transmise IR (17) comprend dans sa zone de contact avec le boîtier (6 ; 43) au moins en partie un revêtement réfléchissant les IR.

8. Dispositif de détection de température (1) selon l'une des revendications précédentes, **caractérisé en ce que** l'optique à lumière transmise IR (17) est pourvue au moins au niveau de sa face avant (17a) d'un revêtement dur.

9. Dispositif de détection de température (1) selon l'une des revendications précédentes, **caractérisé en ce que** l'optique à lumière transmise IR (17) atténue le rayonnement IR.

10. Dispositif de détection de température (1) selon l'une des revendications précédentes, **caractérisé en ce que** l'optique à lumière transmise IR (17) est une fenêtre (17) conservant la forme du faisceau.

11. Dispositif de détection de température (1) selon l'une des revendications 1 à 9, **caractérisé en ce que** l'optique à lumière transmise IR forme un faisceau, en particulier est une lentille IR.

12. Dispositif de détection de température (1) selon l'une des revendications précédentes, **caractérisé en ce que** le dispositif de détection de température (1) peut être monté avec sa face avant (9, 11) sur un adaptateur (2) fixé à l'ustensile de cuisson (4).

13. Dispositif de détection de température (1) selon l'une des revendications précédentes, **caractérisé en ce que** l'élément de couvercle (21) est un pot métallique.

14. Dispositif de détection de température (1) selon l'une des revendications précédentes, **caractérisé en ce que** l'au moins un élément à expansion thermique (26 à 29) est au moins un élément fonctionnel du dispositif de détection de température (1).

15. Dispositif de détection de température (1 ; 41) selon la revendication 14, **caractérisé en ce qu'**un élément fonctionnel est un porte-pile (27) et/ou une pile (28).
